# EUROPÄISCHE PATENTANMELDUNG

(11) **EP 4 036 175 A1**
(43) Veröffentlichungstag der Anmeldung: **03.08.2022**
(21) Anmeldenummer: 21153824.4
(22) Anmeldetag: 27.01.2021
(51) Int. Cl.: C09D 5/08, C09D 163/04, F16L 58/10, C08G 59/18, C08G 59/24, C08G 59/50

(54) **KORROSIONSSCHUTZ-BESCHICHTUNG MIT HOHER WÄRMESCHOCKBESTÄNDIGKEIT**

(71) Anmelder: SIKA TECHNOLOGY AG, 6340 Baar (CH)
(72) Erfinder: TUCHAN, Andre, 75217 Birkenfeld (DE); ZUERNER, Andreas, 75223 Niefen-Öschelbronn (DE); GRÖTZINGER, Jochen, 73525 Schwäbisch Gmünd (DE); KASEMI, Edis, 8046 Zürich (CH)
(74) Vertreter: Sika Patent Attorneys

(57) **Zusammenfassung**

Gegenstand der Erfindung ist eine Korrosionsschutz-Beschichtung umfassend
- mindestens ein Novolak-Epoxidharz mit einer mittleren Funktionalität von mindestens 2.3,
- mindestens ein Amin der Formel (I),

Z-NH-A-NH-CH₂-Y (I)

wobei
A für einen zweiwertigen Alkylen- oder Cycloalkylen-Rest mit 2 bis 8 C-Atomen steht,
Z für H oder ---CH₂-Y steht, und
Y für einen gegebenenfalls substituierten Phenyl-Rest mit 6 bis 12 C-Atomen oder einen Naphthyl-Rest steht,
wobei die beiden Stickstoffatome, an welche der Rest A gebunden ist, durch mindestens zwei C-Atome voneinander getrennt sind, und

- mindestens ein Phosphor-haltiges Korrosionsschutz-Pigment.

Die Korrosionsschutz-Beschichtung ist geeignet für hohe Gebrauchstemperaturen bis 230 °C und verfügt über eine hohe Wärmeschockbeständigkeit. Sie wird bevorzugt verwendet für den Schutz von isolierten Rohren oder Gefässen aus Metall, welche in Kontakt mit heissen und/oder kalten Medien stehen, wobei sie inbesondere Metallkorrosion unter der Isolation verhindert.

## Beschreibung

### Technisches Gebiet

Die Erfindung betrifft Korrosionsschutz-Beschichtungen mit hoher Wärmeschockbeständigkeit, geeignet für den Schutz von isolierten Rohren oder Gefässen.

### Stand der Technik

Beschichtungen oder Anstriche auf Epoxidharz-Basis für den Korrosionsschutz von Bauteilen aus Stahl sind in der Industrie und im Bauwesen weit verbreitet. Sie bestehen aus flüssigen Harz- und Härterkomponenten, welche vor der Applikation gemischt werden und bei Umgebungstemperaturen im Bereich von etwa 5 bis 40 °C zur festen Beschichtung aushärten. Die Beschichtungen sollen eine niedrige Viskosität aufweisen, schnell und störungsfrei aushärten und dabei eine ebenmässige, klebfreie Oberfläche ohne durch Blushing bedingte Trübungen, Flecken oder Beläge ausbilden, und sie sollen bei einem mehrschichtigen Auftrag über eine gute Zwischenhaftung verfügen, was beim Auftreten von Oberflächenstörungen durch Blushing-Effekte oft nicht gegeben ist.

Rohre oder Gefässe aus Stahl, durch welche Heiz- oder Kühlmedien wie Öl, Dampf, heisses oder kaltes Wasser geleitet werden, oder Leitungen für heisse Flüssigkeiten werden heutzutage gut isoliert, um Energie zu sparen. Die Wärmeisolation besteht oft aus einer Schicht isolierender Mineralwolle, welche durch einen äusseren Mantel aus Kunststoff, Aluminium oder Stahl geschützt wird. Dabei besteht das Problem, dass in die Isolation eindringende Feuchtigkeit dort lange verbleibt und dabei am Stahl unter der Isolation erhebliche Korrosionsschäden verursacht, die zudem optisch nicht sofort sichtbar werden. Dieses Phänomen wird auch als "corrosion under insulation", abgekürzt "CUI", bezeichnet. Solche isolierten Rohre oder Gefässe müssen mit einer geeigneten Beschichtung besonders gut gegen Korrosion geschützt werden. Dabei besteht die zusätzliche Problematik, dass die Korrosionsschutz-Beschichtung beim Gebrauch der isolierten Rohre oder Gefässe schockartigen Temperaturwechseln von etwa 200 °C bis zu Eiswasser ausgesetzt ist, wodurch in der Beschichtung Risse oder Abplatzungen entstehen können und der Schutz vor Korrosion nicht mehr gewährleistet ist. Eine geeignete Korrosionsschutz-Beschichtung muss über längere Zeit heisse Temperaturen von etwa 200 °C aushalten und über eine hohe Wärmeschockbeständigkeit verfügen, welche wie in der DIN EN ISO 19277 beschrieben geprüft werden kann. Dabei muss ein beschichtetes Stahlblech 20 Wechselzyklen zwischen einem Umluftofen mit 204 °C und Eiswasser durchlaufen, ohne dass die Beschichtung dabei zerstört wird oder Risse, Abplatzungen oder Stahlkorrosion auftreten.

Korrosionsschutz-Beschichtungen aus dem Stand der Technik enthalten typischerweise Korrosionsschutzpigmente, handelsübliche primäre Polyamine, Phenalkamine oder Polyamidoamine und erhebliche Mengen an Verdünnern wie insbesondere Benzylalkohol, um Blushing-bedingte Störungen bei der Aushärtung zu unterdrücken. Sie sind naturgemäss spröde, insbesondere wenn sie hochfunktionelle Novolak-Epoxidharze enthalten, und damit bei schockartigen Temperaturwechseln empfindlich auf Rissbildung. Zudem diffundieren hochsiedende Verdünner wie Benzylalkohol bei hohen Temperaturen aus der ausgehärteten Beschichtung heraus, wodurch die Beschichtung zusätzlich versprödet und die Isolation geschädigt werden kann.

Epoxidharz-Beschichtungen mit N-Benzyl-1,2-propandiamin oder N-Benzyl-1,2-ethandiamin im Härter sind beschrieben in EP 3,180,383 oder EP 3,344,677. Diese Amine ermöglichen Beschichtungen mit schönen Oberflächen und hohem Glanz, auch bei Aushärtung in der Kälte.

### Darstellung der Erfindung

Aufgabe der vorliegenden Erfindung ist es daher, eine temperaturbeständige Korrosionsschutz-Beschichtung für Temperaturen bis 200 °C mit hoher Wärmeschockbeständigkeit zur Verfügung zu stellen, die geeignet ist für den Korrosionsschutz von isolierten Rohren und Gefässen aus Metall.

Überraschenderweise löst eine Korrosionsschutz-Beschichtung gemäss Anspruch 1 diese Aufgabe. Die Kombination aus Novolak-Epoxidharz, Amin der Formel (I) und Phosphor-haltigem Korrosionsschutz-Pigment ermöglicht überraschenderweise eine temperaturbeständige Korrosionsschutz-Beschichtung, die wiederkehrende schockartige Temperaturwechsel zwischen 204 °C und Eiswasser ohne Beschädigung übersteht. Die erfindungsgemässe Korrosionsschutz-Beschichtung ist niedrigviskos und lässt sich mittels Airless-Spritzapparatur oder Pinsel oder Rolle gut in einer oder mehreren Schichten applizieren. Sie ist geruchsarm und härtet schnell und zuverlässig aus, wobei eine schöne, ebenmässige Oberfläche ohne Trübungen, Flecken oder sonstige Störungen entsteht. Sie verfügt über eine gute Zwischenhaftung und schützt das darunterliegende Metall zuverlässig vor Korrosion. Besonders gute Eigenschaften werden mit einer Kombination aus Amin der Formel (I) und 1,3-Bis(aminomethyl)benzol erreicht, insbesondere in einem Gewichtsverhältnis im Bereich von 50/50 bis 90/10.

Die erfindungsgemässe Korrosionsschutz-Beschichtung wird bevorzugt verwendet für den Schutz von isolierten Rohren oder Gefässen aus Stahl, welche in Kontakt mit heissen oder kalten Medien stehen. Sie verhindert zuverlässig Stahlkorrosion, auch bei längerem Einwirken von in die Isolation eingedrungener Feuchtigkeit und mehrfachen schockartigen Temperaturwechseln im Bereich von 204 °C und Eiswasser.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine Korrosionsschutz-Beschichtung umfassend
- mindestens ein Novolak-Epoxidharz mit einer mittleren Funktionalität von mindestens 2.3,
- mindestens ein Amin der Formel (I),

   Z-NH-A-NH-CH₂-Y (I)

   wobei
   A für einen zweiwertigen Alkylen- oder Cycloalkylen-Rest mit 2 bis 8 C-Atomen steht,
   Z für H oder ---CH₂-Y steht, und
   Y für einen gegebenenfalls substituierten Phenyl-Rest mit 6 bis 12 C-Atomen oder einen Naphthyl-Rest steht,
   wobei die beiden Stickstoffatome, an welche der Rest A gebunden ist, durch mindestens zwei C-Atome voneinander getrennt sind, und
- mindestens ein Phosphor-haltiges Korrosionsschutz-Pigment.

Als "mittlere Funktionalität" eines Epoxidharzes wird der Mittelwert der Anzahl Epoxidgruppen pro Molekül bezeichnet.

Als "Korrosionsschutz-Pigment" werden bei Raumtemperatur feste Teilchen bezeichnet, die in der Korrosionsschutz-Beschichtung unlöslich sind und den Schutz vor Korrosion auf Stahl erhöhen.

Als "Epoxid-Flüssigharz" wird ein technisches Polyepoxid mit einer Glasübergangstemperatur unterhalb von 25°C bezeichnet.

Mit "Poly" beginnende Substanznamen wie Polyamin oder Polyepoxid bezeichnen Substanzen, die formal zwei oder mehr der in ihrem Namen vorkommenden funktionellen Gruppen pro Molekül enthalten.

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.

Als "Aminwasserstoff" werden die Wasserstoffatome von primären und sekundären Aminogruppen bezeichnet.

Als "Aminwasserstoff-Equivalentgewicht" wird die Masse eines Amins oder einer Amin-haltigen Zusammensetzung bezeichnet, die ein Mol-Equivalent Aminwasserstoff enthält. Es wird angegeben in der Masseinheit "g/eq".

Als "Epoxid-Equivalentgewicht" wird die Masse einer Epoxidgruppen-haltigen Verbindung oder Zusammensetzung bezeichnet, die ein Mol-Equivalent Epoxidgruppen enthält. Es wird angegeben in der Masseinheit "g/eq".

Als "Verdünner" wird eine Flüssigkeit bezeichnet, welche die Viskosität einer härtbaren Zusammensetzung zu senken vermag und bei der Aushärtung chemisch nicht ins Polymer eingebunden wird.

Als "Molekulargewicht" wird die molare Masse (in Gramm pro Mol) eines Moleküls bezeichnet. Als "mittleres Molekulargewicht" wird das Zahlenmittel Mₙ einer polydispersen Mischung von oligomeren oder polymeren Molekülen bezeichnet. Es wird mittels Gelpermeationschromatographie (GPC) gegen Polystyrol als Standard bestimmt.

Als "Topfzeit" wird die Zeitspanne ab dem Mischen der Komponenten einer mehrkomponentigen härtbaren Zusammensetzung bezeichnet, innerhalb welcher die Zusammensetzung ohne Einbussen verarbeitet werden kann.

Als "Raumtemperatur" wird eine Temperatur von 23 °C bezeichnet.

Alle im Dokument erwähnten Industriestandards und Normen beziehen sich auf die zum Zeitpunkt der Einreichung der Erstanmeldung gültigen Fassungen. Gewichtsprozente (Gewichts-%), abgekürzt Gew.-%, bezeichnen Massenanteile eines Bestandteils einer Zusammensetzung oder eines Moleküls, bezogen auf die gesamte Zusammensetzung oder das gesamte Molekül, falls nichts anderes angeben. Die Begriffe "Masse" und "Gewicht" werden im vorliegenden Dokument synonym benutzt.

Bevorzugt umfasst die Korrosionsschutz-Beschichtung eine Harz-Komponente und eine Härter-Komponente, wobei das Novolak-Epoxidharz ein Bestandteil der Harz-Komponente ist, das Amin der Formel (I) ein Bestandteil der Härter-Komponente ist und das Phosphor-haltige Korrosionsschutz-Pigment ein Bestandteil der Harz- und/oder der Härter-Komponente ist.

Bevorzugt ist das Novolak-Epoxidharz bei Raumtemperatur flüssig. Bevorzugt hat es eine Viskosität im Bereich von 5 bis 100 Pa s, insbesondere 10 bis 60 Pa s, bei 25 °C. Dabei wird die Viskosität mittels Kegel-Platten Viskosimeter bei einer Schergeschwindigkeit von 10 s⁻¹ gemessen, insbesondere mit einem Kegeldurchmesser von 10 mm, Kegelwinkel von 1° und Kegel-Platten-Abstand von 0.05 mm.

Bevorzugt ist das Novolak-Epoxidharz ein Phenol-Formaldehyd Novolak-Glycidylether.

Bevorzugt hat das Novolak-Epoxidharz eine mittlere Funktionalität von mindestens 2.5, insbesondere im Bereich von 2.5 bis 3.

Bevorzugt hat das Novolak-Epoxidharz ein mittleres Epoxid-Equivalentgewicht im Bereich von 165 bis 181 g/eq.

Als Novolak-Epoxidharz geeignet sind insbesondere kommerziell verfügbare technische Phenol-Formaldehyd Novolak-Glycidylether, wie insbesondere Epilox^{®} N 18-10 (von Leuna Harze), D.E.N 431 (von Olin), Araldite^{®} EPN 1179 (von Huntsman), Epalloy^{®} 8250 (von Huntsman), oder Epon^{®} 154, Epon^{®} 160 oder Epon^{®} 161 (von Momentive).

Zusammen mit dem Novolak-Epoxidharz kann die Korrosionsschutz-Beschichtung weitere Epoxidgruppen-haltige Bestandteile enthalten, insbesondere Anteile von Bisphenol A oder F-Diglycidylether, Bisphenol A-Festharz oder Reaktivverdünner wie insbesondere Butandioldiglycidylether, Hexandioldiglycidylether, Trimethylolpropandi- oder triglycidylether, p-tert.Butylphenylglycidylether, Benzylglycidylether, Allylglycidylether oder Glycidylether von natürlichen Alkoholen wie insbesondere C₁₂- bis C₁₄-Alkylglycidylether.

Bevorzugt enthält die Korrosionsschutz-Beschichtung nur einen geringen oder keinen Anteil an weiteren Epoxidgruppen-haltigen Bestandteilen.

Insbesondere stammen 70 bis 100 %, bevorzugt 80 bis 100 %, insbesondere 90 bis 100 %, aller in der Korrosionsschutz-Beschichtung vorhandenen Epoxidgruppen vom Novolak-Epoxidharz. Dies ermöglicht einen besonders guten Korrosionsschutz.

Die Korrosionsschutz-Beschichtung enthält mindestens ein Amin der Formel (I).

Bevorzugt ist A ausgewählt aus der Gruppe bestehend aus 1,2-Ethylen, 1,2-Propylen, 1,3-Propylen, 1,4-Butylen, 1,3-Butylen, 2-Methyl-1,2-propylen, 1,3-Pentylen, 1,5-Pentylen, 2,2-Dimethyl-1,3-propylen, 1,6-Hexylen, 2-Methyl-1,5-pentylen, 1,7-Heptylen, 1,8-Octylen, 2,5-Dimethyl-1,6-hexylen, 1,2-Cyclohexylen, 1,3-Cyclohexylen, 1,4-Cyclohexylen, 4(2)-Methyl-1,3-cyclohexylen, 1,3-Cyclohexylen-bis(methylen) und 1,4-Cyclohexylen-bis(methylen). Diese Amine der Formel (I) ermöglichen besonders gute Verarbeitungseigenschaften.

Davon bevorzugt ist 1,2-Ethylen, 1,2-Propylen, 2-Methyl-1,5-pentylen oder 1,3-Cyclohexylen-bis(methylen). Diese Amine der Formel (I) sind einfach verfügbar und ermöglichen schöne Oberflächen und eine besonders gute Zwischenhaftung.

Am meisten bevorzugt steht A für 1,2-Ethylen. Diese Amine der Formel (I) ermöglichen besonders gute Verarbeitungseigenschaften und eine besonders schnelle Aushärtung.

Bevorzugt ist Y ausgewählt aus der Gruppe bestehend aus Phenyl, 4-Methylphenyl, 4-Isopropylphenyl, 4-tert.Butylphenyl, 4-Methoxyphenyl, 4-Dimethylaminophenyl und 1-Naphthyl.

Besonders bevorzugt steht Y für Phenyl. Ein solches Amin der Formel (I) ermöglicht eine besonders niedrige Viskosität und somit besonders gute Applikationseigenschaften bei schneller Aushärtung und schönen Oberflächen.

Bevorzugt ist das Amin der Formel (I) ausgewählt aus der Gruppe bestehend aus N-Benzyl-1,2-ethandiamin, N,N'-Dibenzyl-1,2-ethandiamin, N-(4-Methylbenzyl)-1,2-ethandiamin, N,N'-Bis(4-methylbenzyl)-1,2-ethandiamin, N-(4-Isopropylben-zyl)-1,2-ethandiamin, N,N'-Bis(4-isopropylbenzyl)-1,2-ethandiamin, N-(4-tert.Butylbenzyl)-1,2-ethandiamin, N,N'-Bis(4-tert.butylbenzyl)-1,2-ethandiamin, N-(4-Methoxybenzyl)-1,2-ethandiamin, N,N'-Bis(4-methoxybenzyl)-1,2-ethandiamin, N-(4-Dimethylaminobenzyl)-1,2-ethandiamin, N,N'-Bis(4-dimethylaminobenzyl)-1,2-ethandiamin, N-(1-Naphthylmethyl)-1,2-ethandiamin, N,N'-Bis(1-naphthylmethyl)-1,2-ethandiamin, N-Benzyl-1,2-propandiamin, N,N'-Dibenzyl-1,2-propandiamin, N-Benzyl-2-methyl-1,5-pentandiamin, N,N'-Dibenzyl-2-methyl-1,5-pentandiamin, N-Benzyl-1,3-bis(aminomethyl)cyclohexan und N,N'-Dibenzyl-1,3-bis(aminomethyl)-cyclohexan.

Ganz besonders bevorzugt stehen A für 1,2-Ethylen und Y für Phenyl. Ein solches Amin der Formel (I) ist N-Benzyl-1,2-ethandiamin, N,N'-Dibenzyl-1,2-ethandiamin oder eine Mischung davon, insbesondere eine Mischung in einem Gewichtsverhältnis im Bereich von 65/35 bis 95/5, bevorzugt 70/30 bis 95/5, zwischen N-Benzyl-1,2-ethandiamin und N,N'-Dibenzyl-1,2-ethandiamin. Ein solches Amin der Formel (I) ermöglicht geruchsarme Korrosionsschutz-Beschichtungen mit besonders guten Verarbeitungseigenschaften, besonders schneller Aushärtung, besonders schönen Oberflächen und besonders guter Zwischenhaftung.

Bevorzugt steht Z für H. Ein solches Amin der Formel (I) ermöglicht eine besonders schnelle Aushärtung.

Das am meisten bevorzugte Amin der Formel (I) ist N-Benzyl-1,2-ethandiamin, insbesondere N-Benzyl-1,2-ethandiamin mit einem Gehalt an N,N'-Dibenzyl-1,2-ethandiamin von weniger als 5 Gewichts-%.

Das Amin der Formel (I) ist bevorzugt hergestellt mittels partieller Alkylierung von mindestens einem Amin der Formel H₂N-A-NH₂ mit mindestens einem Alkylierungsmittel. Bevorzugt ist die Alkylierung eine reduktive Alkylierung, wobei als Alkylierungsmittel ein Aldehyd der Formel Y-CH=O und Wasserstoff eingesetzt wird. Besonders bevorzugt wird dabei ein molarer Überschuss an Amin der Formel H₂N-A-NH₂ mit einem Aldehyd der Formel Y-CH=O reduktiv alkyliert und überschüssiges Amin der Formel H₂N-A-NH₂ aus dem Reaktionsprodukt destillativ entfernt. Diese Herstellung ist besonders für kleine Reste A wie 1,2-Ethylen bevorzugt.
Das Amin der Formel (I) mit Z = H kann anschliessend mittels Destillation von entsprechendem dialkyliertem Amin mit Z =---CH₂-Y befreit werden.

In einer bevorzugten Ausführungsform der Erfindung enthält die Korrosionsschutz-Beschichtung zusätzlich Addukte des Amins der Formel (I) mit mindestens einem Epoxidharz. Dabei hat das Epoxidharz insbesondere ein mittleres Epoxid-Equivalentgewicht im Bereich von 155 bis 250 g/eq. Insbesondere ist es ein Bisphenol A-oder F-Diglycidylether, insbesondere ein Flüssigharz, oder ein Phenol-Formaldehyd Novolak-Glycidylether.
Geeignete Addukte des Amins der Formel (I) mit mindestens einem Epoxidharz sind insbesondere mit einem solchen Aminüberschuss hergestellt, dass pro Mol-equivalent Epoxidgruppen 1.3 bis 3 mol, bevorzugt 1.4 bis 2.5 mol, insbesondere 1.5 bis 2.1 mol, Amin der Formel (I) eingesetzt wurden.
Ein Addukt des Amins der Formel (I) mit mindestens einem Epoxidharz ermöglicht eine besonders schnelle Aushärtung.

Besonders bevorzugt ist das Amin der Formel (I) frei von Addukten des Amins der Formel (I) mit mindestens einem Epoxidharz. Eine solche Korrosionsschutz-Beschichtung ist besonders niedrigviskos und somit besonders gut applizierbar.

Bevorzugt enthält die Korrosionsschutz-Beschichtung mindestens ein weiteres Amin mit mindestens drei aliphatischen Aminwasserstoffen. Bevorzugt ist das weitere Amin ausgewählt aus der Gruppe bestehend aus 1,3-Bis(aminomethyl)-benzol, 1,4-Bis(aminomethyl)benzol, 1-Amino-3-aminomethyl-3,5,5-trimethylcyclohexan, 1-Methyl-2,4-diaminocyclohexan und 1-Methyl-2,6-diaminocyclohexan.

Besonders bevorzugt davon ist 1,3-Bis(aminomethyl)benzol. Eine solche Korrosionsschutz-Beschichtung verfügt über eine besonders schnelle Aushärtung.

Bevorzugt stammen 40 bis 100 %, besonders bevorzugt 55 bis 100 %, insbesondere 70 bis 100 %, aller in der Korrosionsschutz-Beschichtung vorhandenen Aminwasserstoffe von Aminen der Formel (I). Damit wird eine besonders gute Zwischenhaftung erreicht.

Die Korrosionsschutz-Beschichtung enthält zusätzlich mindestens ein Phosphor-haltiges Korrosionsschutz-Pigment. Bevorzugt ist das Phosphor-haltige Korrosionsschutz-Pigment ein Bestandteil der Harz-Komponente.

Das Phosphor-haltige Korrosionsschutz-Pigment hat bevorzugt eine mittlere Teilchengrösse im Bereich von 0.1 bis 20 µm, bevorzugt 0.5 bis 10 µm, insbesondere 1 bis 5 µm.

Das Phosphor-haltige Korrosionsschutz-Pigment ist bevorzugt ein Phosphat, Orthophosphat oder Polyphosphat.
Es enthält als Gegenion insbesondere Chrom, Zink, Aluminium, Kalzium, Strontium, Molybdän oder eine Kombination dieser Metalle. Bevorzugt ist es frei von Chrom.

Bevorzugt ist das Phosphor-haltige Korrosionsschutz-Pigment ein Zink-Orthophosphat, Zink-Aluminium-Orthophosphat, Kalziumphosphat, Zink-Polyphosphat, Zink-Aluminium-Polyphosphat, Zink-Aluminium-Molybdän-Orthophosphat oder ein Strontium-Aluminium-Polyphosphat.

Bevorzugt enthält das Phosphor-haltige Korrosionsschutz-Pigment Zink. Insbesondere ist es ein organisch modifiziertes basisches Zink-Orthophosphathydrat, welches gegebenenfalls weitere Metalle enthält.

Bevorzugt sind kommerziell verfügbare Phosphor-haltige Korrosionsschutz-Pigmente, wie beispielsweise Heucophos^{®} ZPA, ZPO, ZAPP, ZAM Plus, ZCP Plus, CMP, SAPP oder SRPP (alle von Heubach).

Bevorzugt enthält die Korrosionsschutz-Beschichtung einen Gehalt an Phophorhaltigen Korrosionsschutz-Pigmenten im Bereich von 5 bis 30 Gewichts-%, insbesondere 10 bis 25 Gewichts-%, bezogen auf die gesamte Korrosionsschutz-Beschichtung.

Bevorzugt enthält die Korrosionsschutz-Beschichtung weiterhin mindestens ein Aluminiumpulver. Bevorzugt enthält das Aluminiumpulver plättchenförmige Aluminiumpartikel. Das Aluminiumpulver ermöglicht einen besonders guten Korrosionsschutz.

Bevorzugt liegt der Gehalt an Aluminiumpulver im Bereich von 0.1 bis 5 Gewichts-%, insbesondere 0.3 bis 3 Gewichts-%, bezogen auf die gesamte Korrosionsschutz-Beschichtung.

Bevorzugt enthält die Korrosionsschutz-Beschichtung weitere Bestandteile, insbesondere weitere Härter, Beschleuniger, Füllstoffe, weitere Pigmente, Verdünner und/oder oberflächenaktive Additive.

Als weitere Härter geeignet sind insbesondere Amine mit mindestens zwei, bevorzugt mindestens drei, insbesondere mindestens vier, aliphatischen Aminwasserstoffen, Polyamidoamine, Phenalkamine, aromatische Amine oder Mercaptane.

Geeignete Amine mit mindestens vier aliphatischen Aminwasserstoffen sind insbesondere 2,2-Dimethyl-1,3-propandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2(4),4-Trimethyl-1,6-hexandiamin (TMD), 1,7-Heptandiamin, 1,8-Octandiamin, 1,9-Nonandiamin, 1,10-Decandiamin, 1,11-Undecandiamin, 1,12-Dodecandiamin, 1-Amino-3-aminomethyl-3,5,5-trimethylcyclohexan (IPDA), 1,2-Diaminocyclohexan, 1,3-Diaminocyclohexan, 1,4-Diaminocyclohexan, 1,3-Bis(aminomethyl)cyclohexan, 1,4-Bis(aminomethyl)cyclohexan, Bis(4-aminocyclohexyl)methan, Bis(4-amino-3-methylcyclohexyl)methan, Bis(4-amino-3-ethylcyclohexyl)methan, Bis(4-amino-3,5-dimethylcyclohexyl)methan, Bis(4-amino-3-ethyl-5-methylcyclohexyl)methan, 1-Methyl-2,4(6)-diaminocyclohexan, 2,5(2,6)-Bis(aminomethyl)bicyclo[2.2.1]heptan (NBDA), 3(4),8(9)-Bis(aminomethyl)tricyclo[5.2.1.0^{2,6}]decan, 1,4-Diamino-2,2,6-trimethylcyclohexan (TMCDA), 1,8-Menthandiamin, 3,9-Bis(3-aminopropyl)-2,4,8,10-tetraoxaspiro[5.5]undecan, 1,3-Bis(aminomethyl)benzol (MXDA), 1,4-Bis(aminomethyl)benzol, Bis(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin oder höhere Oligomere dieser Diamine, Bis(3-aminopropyl)polytetrahydrofurane oder andere Polytetrahydrofurandiamine, Polyoxyalkylendi- oder -triamine, insbesondere Polyoxypropylendiamine oder Polyoxypropylentriamine wie Jeffamine^{®} D-230, Jeffamine^{®} D-400 oder Jeffamine^{®} T-403 (alle von Huntsman), Diethylentriamin (DETA), Triethylentetramin (TETA), Tetraethylenpentamin (TEPA), Pentaethylenhexamin (PEHA), Dipropylentriamin (DPTA), N-(2-Aminoethyl)-1,3-propan-diamin (N3-Amin), N,N'-Bis(3-aminopropyl)ethylendiamin (N4-Amin), N,N'-Bis(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin, N,N'-Bis(3-amino-1-ethylpropyl)-2-methyl-1,5-pentandiamin, 3-(2-Aminoethyl)aminopropylamin, Bis(hexamethylen)triamin (BHMT), sowie weiterhin Addukte dieser Amine mit Epoxidharzen.

Davon bevorzugt sind die bereits genannten 1-Amino-3-aminomethyl-3,5,5-trimethylcyclohexan (IPDA), 1-Methyl-2,4(6)-diaminocyclohexan, 1,3-Bis(aminomethyl)-benzol (MXDA) oder 1,4-Bis(aminomethyl)benzol, insbesondere MXDA.

Als Beschleuniger geeignet sind insbesondere Säuren oder zu Säuren hydrolysierbare Verbindungen, Wasser, Nitrate, tertiäre Amine oder Mannich-Basen, insbesondere Salicylsäure, Calciumnitrat, Wasser oder 2,4,6-Tris(dimethylaminomethyl)-phenol, oder eine Kombination dieser Beschleuniger.

Geeignete Füllstoffe sind insbesondere gemahlenes oder gefälltes Calciumcarbonat, welches gegebenenfalls mit Fettsäure, insbesondere Stearaten, beschichtet ist, Baryt (Schwerspat), Talk, Quarzmehl, Quarzsand, Siliciumcarbid, Eisenglimmer, Dolomit, Wollastonit, Kaolin, Mica (Kalium-Aluminium-Silikat), Molekularsieb, Aluminiumoxid, Zinkoxid, Aluminium-dotiertes Zinkoxid, Aluminiumhydroxid, Magnesiumhydroxid, Kieselsäure, Zement, Gips, Flugasche, Russ, Graphit, Metall-Pulver wie Aluminium, Kupfer, Eisen, Zink, Silber oder Stahl, PVC-Pulver oder Hohlkugeln. Davon bevorzugt sind Calciumcarbonat, Quarzmehl, Talk, Aluminiumpulver oder eine Kombination davon.

Als weitere Pigmente bevorzugt sind weitere Korrosionsschutzpigmente, Zinkoxide, Titandioxide, Eisenoxide, Chrom(III)oxide, organische Pigmente oder Russ, insbesondere Titandioxid.

Geeignete Verdünner sind insbesondere n-Propanol, Isopropanol, n-Butanol, Isobutanol, tert.Butanol, 1-Pentanol, 2-Pentanol, 3-Pentanol, 2-Methyl-1-butanol, 3-Methyl-1-butanol, 3-Methyl-2-butanol n-Hexanol, 2-Ethylhexanol, Xylol, 2-Methoxyethanol, Dimethoxyethanol, 2-Ethoxyethanol, 2-Propoxyethanol, 2-Isopropoxyethanol, 2-Butoxyethanol, 2-Phenoxyethanol, 2-Benzyloxyethanol, Benzylalkohol, Ethylenglykol, Ethylenglykoldimethylether, Ethylenglykoldiethylether, Ethylenglykoldibutylether, Ethylenglykoldiphenylether, Diethylenglykol, Diethylenglykolmonomethylether, Diethylenglykolmonoethylether, Diethylenglykolmono-n-butylether, Diethylenglykoldimethylether, Diethylenglykoldiethylether, Diethylenglykoldi-n-butylylether, Propylenglykolbutylether, Propylenglykolphenylether, Dipropylenglykol, Dipropylenglykolmonomethylether, Dipropylenglykoldimethylether, Dipropylenglykoldi-n-butylether, 2,2,4-Trimethyl-1,3-pentandiolmonoisobutyrat, Diphenylmethan, Diisopropylnaphthalin, Erdölfraktionen wie zum Beispiel Solvesso^{®}-Typen (von Exxon), Alkylphenole wie tert.Butylphenol, Nonylphenol, Dodecylphenol, Cardanol, styrolisiertes Phenol, Bisphenole, aromatische Kohlenwasserstoffharze, insbesondere Phenolgruppen-haltige Typen, alkoxyliertes Phenol, insbesondere ethoxyliertes oder propoxyliertes Phenol, insbesondere 2-Phenoxyethanol, Adipate, Sebacate, Phthalate, Benzoate, organische Phosphor- oder Sulfonsäureester oder Sulfonamide.

Bevorzugt sind wenig toxische, geruchsarme Verdünner mit einem Siedepunkt im Bereich von 90 bis 150 °C, bevorzugt n-Butanol, 1-Pentanol, 3-Pentanol, 3-Methyl-1-butanol oder 3-Methyl-2-butanol. Solche Verdünner ermöglichen eine geruchsarme, gut verarbeitbare Korrosionsschutz-Beschichtung, bei welcher der Verdünner in vergleichsweise kurzer Zeit verdampft ist und kaum in eine über der Korrosionsschutz-Beschichtung angebrachte Isolation eindringen und diese schädigen kann.

Bevorzugt sind weiterhin aromatische Verdünner mit einer besonders hohen verdünnenden Wirkung, insbesondere Xylol.

Geeignete oberflächenaktive Additive sind insbesondere Entschäumer, Entlüfter, Netzmittel, Dispergiermittel, Verlaufsmittel oder dispergiertes Paraffinwachs.

Gegebenenfalls enthält die Korrosionsschutz-Beschichtung weitere handelsübliche Hilfs- und Zusatzstoffe, insbesondere Rheologie-Modifizierer wie insbesondere Antiabsetzmittel, Haftverbesserer wie insbesondere Organoalkoxysilane, flammhemmende Substanzen oder Stabilisatoren.

Bevorzugt enthält die Korrosionsschutz-Beschichtung mindestens einen weiteren Bestandteil ausgewählt aus Titandioxid-Pigmenten, Verdünnern und Füllstoffen.

Bevorzugt enthält die Korrosionsschutz-Beschichtung einen geringen Gehalt an organischen Verdünnern, bevorzugt höchstens 50 Gewichts-%, besonders bevorzugt höchstens 35 Gewichts-% bezogen auf die gesamte Beschichtung. Insbesondere enthält sie 5 bis 50 Gewichts-%, bevorzugt 10 bis 35 Gewichts-%, besonders bevorzugt 15 bis 30 Gewichts-%, organische Verdünner.

Bevorzugt hat die Korrosionsschutz-Beschichtung einen Gehalt an organischen Verdünnern im Bereich von 7 bis 50 Volumen-%, bevorzugt 15 bis 40 Volumen-%, bezogen auf die gesamte Beschichtung.

Bevorzugt ist die Korrosionsschutz-Beschichtung nicht wasserbasiert. Bevorzugt enthält sie einen Gehalt an Wasser von weniger als 2 Gewichts-%, insbesondere weniger als 1 Gewichts-%, bezogen auf die gesamte Beschichtung.

Die Harz-Komponente und die Härter-Komponente der Korrosionsschutz-Beschichtung werden in voneinander getrennten Gebinden gelagert und erst kurz vor der Applikation vermischt. Dabei enthält die Harz-Komponente alle Epoxidgruppen-haltigen Verbindungen und die Härter-Komponente alle mit Epoxidgruppen reaktiven Verbindungen, während die weiteren Inhaltsstoffe als Bestandteil der Harz- und/oder der Härter-Komponente vorhanden sein können.

Bevorzugt ist eine Korrosionsschutz-Beschichtung umfassend
- eine Harz-Komponente enthaltend mindestens ein Novolak-Epoxidharz, mindestens ein Phosphor-haltiges Korrosionsschutz-Pigment, mindestens ein Aluminiumpulver, mindestens ein Titandioxid-Pigment, mindestens einen Verdünner, mindestens einen Füllstoff und gegebenenfalls weitere Bestandteile, und
- eine Härter-Komponente umfassend mindestens ein Amin der Formel (I), gegebenenfalls mindestens ein weiteres Amin und gegebenenfalls weitere Bestandteile.

Die Komponenten der Korrosionsschutz-Beschichtung werden kurz vor oder während der Applikation vermischt. Das Mischungsverhältnis wird bevorzugt so gewählt, dass das molare Verhältnis der gegenüber Epoxidgruppen reaktiven Gruppen zu den Epoxidgruppen im Bereich von 0.5 bis 1.5, insbesondere 0.7 bis 1.2, liegt. In Gewichtsteilen liegt das Mischungsverhältnis zwischen der Harz- und der Härter-Komponente typischerweise im Bereich von 1:2 bis 20:1, bevorzugt 1:1 bis 20:1.
Das Mischen der Komponenten erfolgt kontinuierlich oder batchweise mittels eines geeigneten Verfahrens, wobei darauf zu achten ist, dass zwischen dem Mischen der Komponenten und der Applikation nicht zu viel Zeit vergeht und die Applikation innerhalb der Topfzeit erfolgt. Das Mischen und die Applikation erfolgen insbesondere bei Umgebungstemperatur, welche typischerweise im Bereich von etwa 5 bis 40°C, bevorzugt bei etwa 10 bis 35°C, liegt.

Mit dem Mischen der Komponenten beginnt die Aushärtung der Korrosionsschutz-Beschichtung durch chemische Reaktion. Primäre und sekundäre Aminogruppen und gegebenenfalls vorhandene weitere gegenüber Epoxidgruppen reaktive Gruppen reagieren mit den Epoxidgruppen unter deren Ringöffnung. Als Ergebnis hauptsächlich dieser Reaktionen polymerisiert die Korrosionsschutz-Beschichtung und härtet dadurch aus.
Die Aushärtung erstreckt sich typischerweise über einige Stunden bis Tage. Die Dauer hängt unter anderem von der Temperatur, der Reaktivität der Bestandteile, deren Stöchiometrie und der Gegenwart bzw. Menge von Beschleunigern ab.

Im frisch vermischten Zustand hat die Korrosionsschutz-Beschichtung eine niedrige Viskosität.

Die frisch vermischte Korrosionsschutz-Beschichtung wird innerhalb der Topfzeit auf das gegebenenfalls vorbehandelte Rohr oder Gefäss appliziert, bevorzugt mittels einer Spritzapparatur oder mit Hilfe eines Pinsels, einer Rolle, einer Walze oder eines Rakels, bevorzugt in einem Airless-Spritzverfahren oder mit einer Fliessbecherpistole.

Die Korrosionsschutz-Beschichtung wird bevorzugt in einer Schichtdicke (nass) im Bereich von 100 bis 800 µm, bevorzugt 150 bis 500 µm, appliziert, was nach der Aushärtung typischerweise eine Trockenschichtdicke im Bereich von 70 bis 550 µm, bevorzugt 100 bis 350 µm, ergibt.
Insbesondere wird die Korrosionsschutz-Beschichtung in zwei Schichten von je 150 bis 250 µm (nass) appliziert, was nach der Aushärtung typischerweise insgesamt eine Trockenschichtdicke im Bereich von 200 bis 350 µm ergibt.

Für den Fall, dass die Korrosionsschutz-Beschichtung in mehr als einer Schicht appliziert wird, wird mit der Applikation der nachfolgenden Schicht bevorzugt gewartet, bis die vorhergehende Schicht soweit ausgehärtet ist, dass sie eine trockene, nicht-klebrige Oberfläche aufweist. Dabei ist es wichtig, dass die Korrosionsschutz-Beschichtung eine gute Zwischenhaftung aufweist, d.h. dass die weitere Schicht nach der Aushärtung gut auf der vorhergehenden Schicht haftet. Für eine gute Zwischenhaftung ist es besonders vorteilhaft, wenn die ausgehärtete Korrosionsschutz-Beschichtung über eine ebenmässige, glänzende, nicht-klebrige Oberfläche ohne Trübungen, Flecken oder sonstige Störungen, wie sie typischerweise durch Blushing-Effekte entstehen, verfügt.

Die Korrosionsschutz-Beschichtung wird bevorzugt in einer oder zwei Schichten, insbesondere in zwei Schichten, appliziert.

Die Korrosionsschutz-Beschichtung weist nach der Aushärtung über alle Schichten bevorzugt eine Schichtdicke (trocken) im Bereich von 100 bis 550 µm, insbesondere 200 bis 350 µm, auf.

Die erfindungsgemässe Korrosionsschutz-Beschichtung ist geeignet für hohe Temperaturen und verfügt über eine hohe Wärmeschockbeständigkeit.

Insbesondere besteht die ausgehärtete Korrosionsschutz-Beschichtung bei einer Schichtdicke von 300 µm auf Stahlblech einen Test auf Wärmeschockbeständigkeit zwischen 204 °C und Eiswasser mit 20 Zyklen gemäss DIN EN IDO 19277 ohne Beschädigung der Beschichtung und ohne Korrosion des Stahlblechs.

Ein weiterer Gegenstand der Erfindung ist die Verwendung der beschriebenen Korrosionsschutz-Beschichtung für den Schutz von Metalloberflächen mit einer Gebrauchstemperatur bis 230 °C, bevorzugt im Bereich von -45 bis 230 °C, insbesondere 0 bis 230 °C. Dabei verhindert die Korrosionsschutz-Beschichtung auch bei längerem Einwirken von Feuchtigkeit und mehrfachen schockartigen Temperaturwechseln zuverlässig die Korrosion der Metalloberfläche.

Bevorzugt wird sie verwendet für den Schutz von Rohren oder Gefässen aus Metall, welche in Kontakt mit heissen und/oder kalten Medien stehen. Bevorzugt sind die Rohre oder Gefässe im Gebrauch zumindest teilweise mit einer Wärmeisolation umhüllt.

Ein weiterer Gegenstand der Erfindung ist ein Verfahren zum Schützen von Rohren oder Gefässen aus Metall, umfassend die Schritte
(i) Bereitstellen des Rohrs oder Gefässes,
(ii) gegebenenfalls Applizieren einer Grundierung auf die Aussenfläche des Rohrs oder Gefässes,
(iii) Applizieren der vermischten Korrosionsschutz-Beschichtung auf die Aussenfläche des Rohrs oder Gefässes innerhalb der Topfzeit,
(iv) gegebenenfalls Applizieren einer weiteren Schicht der vermischten Korrosionsschutz-Beschichtung auf die ausgehärtete Schicht innerhalb der Topfzeit,
(v) gegebenenfalls Wiederholen von Schritt (iv), und
(vi) gegebenenfalls Montage einer Wärmeisolation auf die ausgehärtete Korrosionsschutz-Beschichtung.

Ein geeignetes Rohr aus Metall ist insbesondere Teil einer Leitung, durch welche heisse und/oder kalte Medien geführt werden, insbesondere Öl, Dampf, Warmwasser, Kaltwasser oder Eiswasser.
Ein geeignetes Gefäss aus Metall ist insbesondere ein Boiler, ein Tank, ein Rührkessel oder ein Reaktionsgefäss, jeweils mit integriertem Heiz- und/oder Kühlmantel, bei welchem zumindest die Aussenfläche aus Metall besteht.

Das Metall ist bevorzugt Stahl. Geeignet sind alle Arten von Stahl, insbesondere unlegierter Stahl, auch Baustahl genannt, oder Edelstahl, insbesondere austenitischer Edelstahl.

Die Metalloberfläche ist bevorzugt gereinigt, insbesondere durch Strahlen, und frei von Öl, Fett, Oxidschichten, Rost und metallischen Spänen. Sie weist bevorzugt einen Rauheitsgrad im Bereich von fein über mittel bis zu grob auf.
Für den Fall, dass die erfindungsgemässe Korrosionsschutz-Beschichtung für die Reparatur eines bereits beschichteten Rohrs oder Gefässes eingesetzt wird, bei welchem die alte Beschichtung beschädigt und/oder nicht mehr tauglich ist, ist die Oberfläche bevorzugt so vorbereitet, dass die alte Beschichtung zumindest teilweise von der Metalloberfläche entfernt wurde, bevorzugt durch Schleifen.

Gegebenenfalls wird auf die Aussenfläche des Rohrs oder Gefässes eine Grundierung appliziert, insbesondere durch Spritzen oder mittels Pinsel, insbesondere in einer Trockenschichtdicke im Bereich von 10 bis 100 µm. Dafür geeignet ist insbesondere eine Grundierung mit hohem Gehalt an Zinkpulver, insbesondere eine Ethylsilikat-Zinkstaub Grundierung, wie insbesondere SikaCor^{®} Zinc ZS (von Sika).

Für die Applikation der Korrosionsschutz-Beschichtung wird in Schritt (iii) die vermischte Korrosionsschutz-Beschichtung auf die gegebenenfalls grundierte Aussenfläche des Rohrs oder Gefässes innerhalb der Topfzeit appliziert. Die Applikation erfolgt bevorzugt mittels einer Spritzapparatur oder mit Hilfe eines Pinsels, einer Rolle, einer Walze oder eines Rakels, bevorzugt in einem Airless-Spritzverfahren.

Gegebenenfalls wird die Korrosionsschutz-Beschichtung in mehr als einer Schicht appliziert. Dabei wird Schritt (iv) ein- oder mehrmals durchgeführt, wobei dazwischen jeweils gewartet wird, bis die vorherige Schicht soweit ausgehärtet ist, dass eine trockene, nicht-klebrige Oberfläche entstanden ist.

Bevorzugt weist die Korrosionsschutz-Beschichtung nach der Aushärtung über alle Schichten betrachtet eine Schichtdicke (trocken) im Bereich von 100 bis 550 µm, bevorzugt 200 bis 350 µm, auf.

Insbesondere wird die Korrosionsschutz-Beschichtung in zwei Schichten von je 150 bis 250 µm (nass) appliziert, was nach der Aushärtung typischerweise insgesamt eine Trockenschichtdicke im Bereich von 200 bis 350 µm ergibt.

Gegebenenfalls wird eine Wärmeisolation auf die ausgehärtete Korrosionsschutz-Beschichtung, also über das beschichtete Rohr oder Gefäss, montiert. Die Wärmeisolation vermindert einen Verlust an Wärme- oder Kühlenergie. Insbesondere umfasst die Wärmeisolation eine Schicht isolierender Mineralwolle, welche durch einen äusseren Mantel aus Kunststoff, Aluminium oder Stahl geschützt ist. Bei eindringender Feuchtigkeit kann sich die Mineralwolle mit Wasser vollsaugen, wobei der Mantel ein schnelles Abtrocknen verhindert, wodurch solche isolierten Rohre oder Gefässe besonders gefährdet sind für Metallkorrosion. Ein guter Korrosionsschutz ist deshalb notwendig, wobei, wie bereits beschrieben, eine hohe Wärmeschockbeständigkeit der Korrosionsschutz-Beschichtung benötigt wird, damit die Beschichtung bei schnellen Wechseln zwischen Heizen und Kühlen keine Risse bekommt oder sonstwie beschädigt wird.

Bevorzugt wird eine Wärmeisolation auf die ausgehärtete Korrosionsschutz-Beschichtung montiert.

Für den Fall, dass Bereiche des beschichteten Rohrs oder Gefässes nicht mit einer Wärmeisolation versehen werden, ist es bevorzugt, dass die ausgehärtete Korrosionsschutz-Beschichtung in solchen Bereichen mit einem zusätzlichen Top Coat überschichtet wird, wobei der Top Coat die Korrosionsschutz-Beschichtung vor mechanischer Beschädigung schützt. Bevorzugt als Top Coat ist eine Polyurethan-Beschichtung, insbesondere ein zweikomponentiger Polyurethan-Lack, welcher mittels einer Spritzapparatur aufgetragen werden kann.

Ein weiterer Gegenstand der Erfindung ist ein beschichtetes Rohr oder Gefäss, erhalten aus dem Verfahren zum Schützen von Rohren oder Gefässen aus Metall, wie vorgängig beschrieben.
Bevorzugt steht das Rohr oder Gefäss beim Gebrauch in Kontakt mit heissen und/oder kalten Medien, insbesondere in einem Temperaturbereich bis 230 °C, bevorzugt im Bereich von -45 bis 230 °C.
Bevorzugt ist das Rohr oder Gefäss im Gebrauch zumindest teilweise mit einer Wärmeisolation umhüllt.
Bevorzugt ist das Rohr oder Gefäss Bestandteil einer Raffinerieanlage, einer Apparatur für chemische Prozesse, eines Chemieparks, einer Kraftwerksanlage oder einer Heizungsanlage.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

"AHEW" steht für das Aminwasserstoff-Equivalentgewicht.

"EEW" steht für das Epoxid-Equivalentgewicht.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Sigma-Aldrich Chemie GmbH.

### Verwendete Substanzen und Abkürzungen:

| | |
|---|---|
| Novolak-Epoxidharz: | Phenol-Formaldehyd Novolak-Glycidylether, mittlere Funktionalität 2.6, Viskosität bei 25 °C im Bereich von 20 bis 40 Pa·s, EEW 175 g/eq (Epilox^{®} N 18-10 von Leuna Harze) |
| Zink-Pigment: | organisch modifiziertes basisches Zinkorthophosphathydrat Pigment (Heucophos^{®} ZPO von Heubach) |
| B-EDA | N-Benzyl-1,2-ethandiamin, AHEW50.1 g/eq, hergestellt wie nachfolgend beschrieben |
| B-EDA-Addukt | Addukt von N-Benzyl-1,2-ethandiamin mit Bisphenol A-diglycidylether, AHEW 116.3 g/eq, hergestellt wie nachfolgend beschrieben |
| MXDA | 1,3-Bis(aminomethyl)benzol, AHEW 34 g/eq (von Mitsubishi Gas Chemical) |
| IPDA | 1-Amino-3-aminomethyl-3,5,5-trimethylcyclohexan, AHEW 42.6 g/eq (Vestamin^{®} IPD, von Evonik) |
| 1,3-BAC | 1,3-Bis(aminomethyl)cyclohexan, AHEW 35.5 g/eq (von Mitsubishi Gas Chemical) |
| MCDA | Mischung aus 1-Methyl-2,4-diaminocyclohexan und 1-Methyl-2,6-diaminocyclohexan, AHEW 32.1 g/eq (Baxxodur^{®} EC 210 von BASF) |
| M 1180 | modifizierter, Nonylphenol-freier Polyaminaddukthärter für erhöhte Chemikalienbeständigkeit, AHEW 122 g/eq (Epilox^{®} - Härter M 1180 von Leuna Harze) |
| D-230 | Polyoxypropylendiamin, mittleres Molekulargewicht 230 g/mol, AHEW60 g/eq (Jeffamine^{®} D-230, von Huntsman) |

### N-Benzyl-1,2-ethandiamin (B-EDA):

180.3 g (3 mol) 1,2-Ethandiamin wurden bei Raumtemperatur vorgelegt, mit einer Lösung aus 106.0 g (1 mol) Benzaldehyd in 1200 ml Isopropanol vermischt und 2 Stunden gerührt, anschliessend bei 80 °C, 80 bar Wasserstoff-Druck und einem Fluss von 5 ml/min auf einer kontinuierlich arbeitenden Hydrierapparatur mit Pd/C-Festbettkatalysator hydriert und die hydrierte Lösung am Rotationsverdampfer bei 65 °C eingeengt, wobei unreagiertes 1,2-Ethandiamin, Wasser und Isopropanol entfernt wurden. Die so erhaltene Reaktionsmischung wurde bei 80°C unter Vakuum mittels Destillation gereinigt. Erhalten wurde eine farblose Flüssigkeit mit einem mittels GC bestimmten Gehalt an N-Benzyl-1,2-ethandiamin von > 97%.

### B-EDA-Addukt:

55.0 g N-Benzyl-1,2-ethandiamin (B-EDA) wurden auf 80 °C erwärmt und unter gutem Rühren langsam 45.0 g Araldite^{®} GY 250 zugegeben, wobei die Temperatur der Reaktionsmischung zwischen 70 und 90 °C gehalten wurde. Die Reaktionsmischung wurde während einer Stunde in diesem Temperaturbereich belassen und anschliessend abgekühlt. Es wurde eine klare, leicht gelbliche Flüssigkeit mit einer Viskosität bei 20 °C von 262 Pa·s, einer Aminzahl von 408 mg KOH/g und einem berechneten AHEW von 116.3 g/eq erhalten.

Die Viskosität wurde gemessen mittels Kegel-Platten Viskosimeter (Kegeldurchmesser 25 mm, Kegelwinkel 1°, Kegel-Platten-Abstand 0.05 mm) bei einer Schergeschwindigkeit von 10s⁻¹.

### Herstellung von Korrosionsschutz-Beschichtungen:

### Beispiele 1 bis 9:

Für diese Beispiele wurde eine Harz-Komponente hergestellt, indem die folgenden Inhaltsstoffe mittels eines Zentrifugalmischers (SpeedMixer^{™} DAC 150, FlackTek Inc.) vermischt und unter Ausschluss von Feuchtigkeit aufbewahrt wurden:
21.0 Gewichtsteile Novolak-Epoxidharz (Epilox^{®} N 18-10),
10.0 Gewichtsteile Xylol,
15.0 Gewichtsteile Zink-Pigment (Heucophos^{®} ZPO),
1.5 Gewichtsteile Paste mit 65 Gew.% Aluminiumpulver (STAPA 4 n.l., von Eckart),
7.0 Gewichtsteile Titandioxid,
1.5 Gewichtsteile Eisenoxid,
34.0 Gewichtsteile Talk,
10.0 Gewichtsteile n-Butanol.

Für jedes Beispiel wurde daraufhin eine separate Härter-Komponente hergestellt, indem die in den Tabellen 1 bis 2 angegebenen Inhaltsstoffe der Härter-Komponente in den angegebenen Mengen (in Gewichtsteilen) vermischt und unter Ausschluss von Feuchtigkeit aufbewahrt wurden.

Anschliessend wurden die beiden Komponenten mittels des Zentrifugalmischers zu einer homogenen Flüssigkeit verarbeitet und diese unverzüglich folgendermassen geprüft:
Zur Beurteilung des **Aspekts** und der **Zwischenhaftung** wurde von jeder Beschichtung ein Prüfkörper hergestellt, indem eine Schicht von 180 µm Nassfilm auf ein Stahlblech 150x100x3mm mittels Fliessbecherpistole aufgespritzt, 24 Stunden im Normklima gelagert und anschliessend eine zweite Schicht von 180 µm Nassfilm mittels Fliessbecherpistole aufgetragen wurde. Nach einer Lagerzeit von 14 Tagen im Normklima wurde die Oberfläche der Beschichtung beurteilt (= Aspekt). Als "schön" wurde eine ebenmässige, nicht-klebrige, glänzende Oberfläche ohne Struktur, Belag oder sonstige Fehler bewertet. Als "Schlieren" wurden streifenförmige Muster auf der Oberfläche bezeichnet. Als "trüb" wurde eine weisslich angelaufene, nicht-glänzende Oberfläche bezeichnet. Als Mass für die Zwischenhaftung wurde anschliessen ein Test auf Haftzug gemäss ISO 4624 mit einer Prüfgeschwindigkeit von 1MPa/s durchgeführt, wobei ein auf die Beschichtung aufgeklebter Stempel senkrecht nach oben weggezogen wurde. Dabei wurde die Zwischenhaftung als "schlecht" bewertet, wenn der Wert des Haftzugs weniger als 5 MPa betrug und zwischen den beiden Schichten des Prüfkörpers ein adhädives Bruchbild auftrat. Andernfalls wurde die Zwischenhaftung als "gut" bewertet. Als Mass für die **Wärmeschockbeständigkeit** wurden für jedes Beispiel mehrere Prüfkörper hergestellt, indem jeweils ein Stahlblech (gestrahlt SA 2½, Rautiefe 60-80 µm) 150x100x3 mm beschichtet wurde, indem entweder
(a) zweimal 220 µm Nassfilm (= zweimal etwa 150 µm Trockenfilm, insgesamt etwa 300 µm Trockenfilm) mittels einer Fliessbecherpistole aufgespritzt wurden, oder
(b) zweimal 220 µm Nassfilm (= zweimal etwa 150 µm Trockenfilm, insgesamt etwa 300 µm Trockenfilm) mittels einem Rakel aufgetragen wurden, oder
(c) einmal 440 µm Nassfilm (= etwa 300 µm Trockenfilm) mittels einer Fliessbecherpistole aufgespritzt wurde, oder
(d) einmal 440 µm Nassfilm (= 300 µm Trockenfilm) mittels einem Rakel aufgetragen wurde.

Beim Auftrag von zwei Schichten wurde zwischen den Schichten eine Wartezeit von 24 Stunden eingehalten.

Die so hergestellten Prüfkörper wurden 7 Tage im Normklima gelagert und durchliefen anschliessend 20 Zyklen gemäss DIN EN ISO 19277 zwischen einem Umluftofen mit 204 °C und Eiswasser, wobei die Prüfkörper im Umluftofen bei 204 °C gelagert, einmal pro 24 Stunden während 1 Minute direkt aus dem Ofen in einen Eimer mit Eiswasser getaucht und anschliessend direkt wieder im Umluftofen aufbewahrt wurden (= 1 Zyklus). Übers Wochenende wurden die Prüfkörper im Umluftofen gelagert. Nach 20 Zyklen wurden die Prüfkörper auf Raumtemperatur abgekühlt und optisch mit Hilfe einer Lupe daraufhin beurteilt, ob die Beschichtung intakt oder zerstört war, und ob Risse oder Abplatzungen in der Beschichtung oder Korrosion am Stahlblech auftraten.

Bei den Resultaten gab es keine Unterschiede, ob die Beschichtung in einer oder zwei Schichten oder mittels Spritzpistole oder Rakel aufgetragen worden war.

Als "bestanden" wurde ein Prüfkörper beurteilt, bei welchem die Beschichtung intakt war und keine Risse oder Abplatzungen in der Beschichtung und keine Korrosion am Stahlblech auftraten.

Als Mass für die **Korrosionsbeständigkeit** wurde ein wie für den Test auf Zwischenhaftung hergestellter Prüfkörper mit 720 h Kondensationswasser **(KW)** gemäss ISO 6270-1 belastet und anschliessend ein Test auf Haftzug gemäss ISO 4624 mit einer Prüfgeschwindigkeit von 1MPa/s durchgeführt. Zeigte der Prüfkörper keine übermässigen Anzeichen von Korrosion und betrug der Wert des Haftzugs mehr als 6 MPa wurde der Test als "sehr gut" , bei mehr als 4 MPa als "gut" und andernfalls als "schlecht" bewertet. Ein weiterer identisch hergestellter Prüfkörper wurde 1440 h mit neutralem Salzsprühnebel **(SSN)** gemäss ISO 9227 belastet und anschliessend ein Test auf Haftzug gemäss ISO 4624 mit einer Prüfgeschwindigkeit von 1MPa/s durchgeführt, wobei die Bewertung wie bei der Belastung mit Kondensationswasser beschrieben bewertet wurde.

Die Resultate sind in den Tabellen 1 bis 2 angegeben.

Die mit "(Ref.)" bezeichneten Beispiele sind Vergleichsbeispiele.

**Tabelle 1: Zusammensetzung und Eigenschaften der Beispiele 1 bis 4.**

| **Beispiel** | **1** | **2** | **3** | **4 (Ref.)** |
|---|---|---|---|---|
| **Harz-Komponente:** | 100.0 | 100.0 | 100.0 | 100.0 |
| **Härter-Komponente:** | | | | |
| B-EDA | 6.0 | 4.2 | 3.46 | - |
| B-EDA-Addukt | - | 4.2 | - | - |
| MXDA | - | - | 1.73 | 4.08 |
| Aspekt | schön | schön | schön | trüb |
| Zwischenhaftung | gut | gut | gut | schlecht |
| Wärmeschockbeständigkeit: | bestanden | bestanden | bestanden | bestanden |
| Korrosionsbestän-digkeit: (KW) | sehr gut | sehr gut | sehr gut | schlecht |
| (SSN) | sehr gut | sehr gut | gut | schlecht |

**Tabelle 2: Zusammensetzung und Eigenschaften der Beispiele 5 bis 9. * sehr langsame Aushärtung**

| **Beispiel** | **5 (Ref.)** | **6 (Ref.)** | **7 (Ref.)** | **8 (Ref.)** | **9 (Ref.)** |
|---|---|---|---|---|---|
| **Harz-Komponente:** | 100.0 | 100.0 | 100.0 | 100.0 | 100.0 |
| **Härter-Komponente:** | | | | | |
| 1,3-BAC | 4.26 | - | - | - | - |
| IPDA | - | 5.11 | - | - | - |
| MCDA | - | - | 3.85 | - | - |
| M 1180 | - | - | - | 14.64 | - |
| D-230 | - | - | - | - | 4.08 |
| Aspekt | Schlieren, leicht trüb | trüb | trüb | schön | schön* |
| Zwischenhaftung | schlecht | schlecht | schlecht | gut | gut |
| Wärmeschockbeständigkeit: | Risse | zerstört | Risse | zerstört | zerstört |

## Patentansprüche

1. Korrosionsschutz-Beschichtung umfassend
- mindestens ein Novolak-Epoxidharz mit einer mittleren Funktionalität von mindestens 2.3,
- mindestens ein Amin der Formel (I),
Z-NH-A-NH-CH₂-Y (I)
wobei
A für einen zweiwertigen Alkylen- oder Cycloalkylen-Rest mit 2 bis 8 C-Atomen steht,
Z für H oder ---CH₂-Y steht, und
Y für einen gegebenenfalls substituierten Phenyl-Rest mit 6 bis 12 C-Atomen oder einen Naphthyl-Rest steht,
wobei die beiden Stickstoffatome, an welche der Rest A gebunden ist, durch mindestens zwei C-Atome voneinander getrennt sind, und
- mindestens ein Phosphor-haltiges Korrosionsschutz-Pigment.

2. Korrosionsschutz-Beschichtung gemäss Anspruch 1, **dadurch gekennzeichnet, dass** sie eine Harz-Komponente und eine Härter-Komponente umfasst, wobei das Novolak-Epoxidharz ein Bestandteil der Harz-Komponente ist, das Amin der Formel (I) ein Bestandteil der Härter-Komponente ist und das Phosphor-haltige Korrosionsschutz-Pigment ein Bestandteil der Harz- und/oder der Härter-Komponente ist.

3. Korrosionsschutz-Beschichtung gemäss einem der Ansprüche 1 bis 2, **dadurch gekennzeichnet, dass** 70 bis 100 % aller in der Korrosionsschutz-Beschichtung vorhandenen Epoxidgruppen vom Novolak-Epoxidharz stammen.

4. Korrosionsschutz-Beschichtung gemäss einem der Ansprüche 1 bis 3, **dadurch gekennzeichnet, dass** A ausgewählt ist aus der Gruppe bestehend aus 1,2-Ethylen, 1,2-Propylen, 1,3-Propylen, 1,4-Butylen, 1,3-Butylen, 2-Methyl-1,2-propylen, 1,3-Pentylen, 1,5-Pentylen, 2,2-Dimethyl-1,3-propylen, 1,6-Hexylen, 2-Methyl-1,5-pentylen, 1,7-Heptylen, 1,8-Octylen, 2,5-Dimethyl-1,6-hexylen, 1,2-Cyclohexylen, 1,3-Cyclohexylen, 1,4-Cyclohexylen, 4(2)-Methyl-1,3-cyclohexylen, 1,3-Cyclohexylen-bis(methylen) und 1,4-Cyclohexylen-bis(methylen).

5. Korrosionsschutz-Beschichtung gemäss einem der Ansprüche 1 bis 4, **dadurch gekennzeichnet, dass** Y für einen Rest ausgewählt aus der Gruppe bestehend aus Phenyl, 4-Methylphenyl, 4-Isopropylphenyl, 4-tert.Butylphenyl, 4-Methoxyphenyl, 4-Dimethylaminophenyl und 1-Naphthyl steht.

6. Korrosionsschutz-Beschichtung gemäss einem der Ansprüche 1 bis 5, **dadurch gekennzeichnet, dass** A für 1,2-Ethylen und Y für Phenyl stehen.

7. Korrosionsschutz-Beschichtung gemäss einem der Ansprüche 1 bis 6, **dadurch gekennzeichnet, dass** zusätzlich Addukte des Amins der Formel (I) mit mindestens einem Epoxidharz enthalten sind.

8. Korrosionsschutz-Beschichtung gemäss einem der Ansprüche 1 bis 7, **dadurch gekennzeichnet, dass** mindestens ein weiteres Amin mit mindestens drei aliphatischen Aminwasserstoffen enthalten ist.

9. Korrosionsschutz-Beschichtung gemäss einem der Ansprüche 1 bis 8, **dadurch gekennzeichnet, dass** 40 bis 100 %, bevorzugt 55 bis 100 %, insbesondere 70 bis 100 %, aller in der Korrosionsschutz-Beschichtung vorhandenen Aminwasserstoffe von Aminen der Formel (I) stammen.

10. Korrosionsschutz-Beschichtung gemäss einem der Ansprüche 1 bis 9, **dadurch gekennzeichnet, dass** das Phosphor-haltige Korrosionsschutz-Pigment ein Phosphat, Orthophosphat oder Polyphosphat ist.

11. Korrosionsschutz-Beschichtung gemäss einem der Ansprüche 1 bis 10, **dadurch gekennzeichnet, dass** weiterhin mindestens ein Aluminiumpulver enthalten ist.

12. Korrosionsschutz-Beschichtung gemäss einem der Ansprüche 1 bis 11, **dadurch gekennzeichnet, dass** mindestens ein weiterer Bestandteil ausgewählt aus Titandioxid-Pigmenten, Verdünnern und Füllstoffen enthalten ist.

13. Verwendung einer Korrosionsschutz-Beschichtung gemäss einem der Ansprüche 1 bis 12 für den Schutz von Metalloberflächen mit einer Gebrauchstemperatur bis 230 °C.

14. Verfahren zum Schützen von Rohren oder Gefässen aus Metall, umfassend die Schritte
(e) Bereitstellen des Rohrs oder Gefässes,
(ii) gegebenenfalls Applizieren einer Grundierung auf die Aussenfläche des Rohrs oder Gefässes,
(iii) Applizieren der vermischten Korrosionsschutz-Beschichtung gemäss einem der Ansprüche 1 bis 12 auf die Aussenfläche des Rohrs oder Gefässes innerhalb der Topfzeit,
(iv) gegebenenfalls Applizieren einer weiteren Schicht der vermischten Korrosionsschutz-Beschichtung gemäss einem der Ansprüche 1 bis 12 auf die ausgehärtete Schicht innerhalb der Topfzeit,
(v) gegebenenfalls Wiederholen von Schritt (iv), und
(vi) gegebenenfalls Montage einer Wärmeisolation auf die ausgehärtete Korrosionsschutz-Beschichtung.

15. Beschichtetes Rohr oder Gefäss, erhalten aus einem Verfahren gemäss Anspruch 14.
